# FASCICULE DE BREVET EUROPEEN

(11) **EP 2 223 022 B1**
(45) Date de publication et mention de la délivrance du brevet: **01.06.2011**
(21) Numéro de dépôt: 08872214.5
(22) Date de dépôt: 25.11.2008
(51) Int. Cl.: F25B 21/00

(54) **GENERATEUR MAGNETOCALORIQUE**
MAGNETOKALORISCHER GENERATOR
MAGNETOCALORIC GENERATOR

(30) Priorité: 04.12.2007 FR 0708472
(43) Date de publication de la demande: 01.09.2010
(73) Titulaire: Cooltech Applications S.A.S., 67810 Holtzheim (FR)
(72) Inventeur: Heitzler, Jean-Claude, F-68180 Horbourg-Wihr (FR); Muller, Christian, F-67000 Strasbourg (FR)
(74) Mandataire: Nithardt, Roland
(86) Numéro de dépôt international: PCT/FR2008/001639
(87) Numéro de publication internationale: WO 2009/098391

(56) Documents cités:
- EP-A- 1 736 719
- FR-A- 2 875 895
- FR-A- 2 890 158
- FR-A- 2 901 325
- GB-A- 2 086 481

## Description

### Domaine technique:

La présente invention concerne un générateur magnétocalorique comportant au moins un étage thermique pourvu d'éléments actifs à base de matériau magnétocalorique disposés autour d'un axe central, un arrangement magnétique porté par un arbre moteur entraîné en rotation autour dudit axe central par un actionneur, et agencé pour soumettre lesdits éléments actifs à une variation de champ magnétique, au moins un fluide caloporteur contenu dans ledit générateur, ce fluide étant poussé au travers desdits éléments actifs par des moyens de poussée, au moins une chambre d'échange dite froide et une chambre d'échange dite chaude destinées à être couplées respectivement à des circuits extérieurs d'utilisation, ledit générateur comportant également des moyens de circulation forcée du fluide caloporteur couplés audit arbre moteur pour être entraînés par le même actionneur que celui dudit arrangement magnétique.

### Technique antérieure :

La technologie du froid magnétique est connue depuis plus d'une vingtaine d'années et on sait les avantages qu'elle apporte en termes d'écologie et de développement durable. On connaît également ses limites quant à sa puissance calorifique utile et à son rendement. Dès lors, les recherches menées dans ce domaine tendent toutes à améliorer les performances d'un tel générateur, en jouant sur les différents paramètres, tels que la puissance d'aimantation, les performances des éléments actifs en matériau magnétocalorique, la surface d'échange entre le fluide caloporteur et ces éléments actifs, les performances des échangeurs de chaleur, etc.

Le générateur magnétocalorique décrit dans la précédente demande de brevet déposée sous le numéro FR 07/07612 par le même demandeur comporte un ou plusieurs modules thermiques empilés pour former un ou plusieurs étages thermiques, comportant chacun N éléments actifs en matériau magnétocalorique adjacents, disposés en cercle autour d'un axe central et soumis à une variation de champ magnétique pour faire varier leur température. Ces éléments actifs sont associés à N pistons animés d'un mouvement de translation alternatif par une came de commande afin de pousser le fluide caloporteur contenu dans le module thermique simultanément dans deux directions opposées, de sorte qu'une première fraction de fluide caloporteur est poussée à travers les éléments actifs soumis à un cycle de chauffage en direction d'une chambre dite chaude, et qu'une seconde fraction de fluide caloporteur est poussée à travers les éléments actifs soumis à un cycle de refroidissement en direction d'une chambre dite froide, et inversement. Ainsi, on obtient un nombre N de mini ou micro générateurs thermiques fonctionnant simultanément et en parallèle, permettant de multiplier par le coefficient N la surface d'échange entre les éléments actifs et le fluide caloporteur, augmentant ainsi le pouvoir calorifique d'un tel générateur. De plus, chaque cycle magnétique est utilisé de manière optimale puisque le déplacement du fluide caloporteur dans les deux sens de circulation permet de collecter simultanément les calories produites par les éléments actifs soumis à une augmentation du champ magnétique (cycle de chauffage) et les frigories produites par les éléments actifs soumis à une diminution du champ magnétique (cycle de refroidissement), sans temps mort, ni cycle perdu.

On connaît, par ailleurs, d'autres générateurs magnétocaloriques dans lesquels le fluide caloporteur est mis en circulation forcée par une double pompe externe ou deux pompes externes, intercalées entre le générateur et les circuits externes comportant notamment des échangeurs de chaleur. Un des exemples est décrit dans la publication WO 2005/0430052 déposée par le même demandeur. Dans ce type de générateur, les pompes sont d'un type connu en soi et doivent être alimentées en puissance pour pouvoir fonctionner, notamment en courant électrique, ce qui pénalise le rendement énergétique global du générateur. Pour contourner cet inconvénient, la publication FR 2 875 895 propose de coupler la pompe de circulation du fluide caloporteur au moyen d'entrainement du générateur.

FR-A-2 890 158 décrit un générateur magnéto-calorique selon le préambule de la revendication 1.

### Exposé de l'invention :

La présente invention vise à améliorer le rendement d'un générateur magnétocalorique en vue d'augmenter son pouvoir calorifique et sa rentabilité économique, tout en conservant son aspect modulaire qui lui permet d'être facilement configurable en fonction d'un cahier des charges donné dans le cadre d'applications aussi bien industrielles que domestiques.

Dans ce but, l'invention concerne un générateur magnétocalorique du genre indiqué en préambule, caractérisé entre autre en ce que lesdits moyens de circulation forcée sont intégrés audit générateur dans son volume intérieur. Le générateur de l'invention est défini par les caractéristiques de la revendication 1.

Grâce à cette construction, le générateur est équipé de moyens de circulation forcée assurant un brassage du fluide à l'intérieur du générateur qui a pour effet de renouveler systématiquement le fluide poussé à travers les éléments actifs. De plus, ces moyens de circulation forcée sont activés par un seul et même actionneur. On augmente ainsi le pouvoir calorifique du générateur sans pénaliser son rendement énergétique.

Dans le cas où les moyens de poussée comportent au moins un piston agencé pour pousser le fluide caloporteur au travers des éléments actifs et entraîné en translation alternative par au moins une came couplée en rotation avec ledit arbre moteur, les moyens de circulation forcée peuvent comporter au moins une pompe à piston pourvue d'au moins un piston central porté librement par ledit arbre moteur et entraîné en translation alternative par ladite came. Dans ce cas, la came peut être pourvue d'une couronne dentée intérieure couplée en rotation avec l'arbre moteur au moyen d'un train d'engrenages à pignons satellites.

Les moyens de circulation forcée peuvent également comporter des petits pignons satellites disposés autour dudit axe central, portés par le corps du générateur et engrenant une couronne dentée intérieure solidaire de la came, et des passages de fluide, chaque petit pignon satellite formant une mini pompe à engrenage. Ces moyens de circulation forcée peuvent en plus comporter au moins une turbine couplée audit arbre moteur.

Dans une autre variante de réalisation, les moyens de circulation forcée peuvent comporter au moins un pignon satellite engrenant un pignon moteur solidaire dudit arbre moteur et associé à un corps de pompe pourvu de canaux de circulation du fluide caloporteur, ledit pignon satellite associé audit corps de pompe formant une pompe à engrenage.

Dans une autre variante de réalisation lesdits moyens de circulation forcée peuvent former simultanément lesdits moyens de poussée.

Dans ce cas, lesdits moyens de circulation forcée peuvent comporter deux ensembles disposés de part et d'autre dudit étage thermique et décalés angulairement, chaque ensemble comportant des pignons satellites disposés autour dudit axe central, engrenant une couronne dentée intérieure solidaire du corps du générateur et lié chacun en rotation à l'une des deux roues dentées d'un engrenage formant une mini pompe à engrenage, ledit engrenage étant intégré dans un anneau entraîné en rotation par ledit arbre moteur, et en ce que lesdits ensembles comportent des passages traversants autorisant une circulation de fluide entre la chambre d'échange chaude ou froide concernée et les éléments actifs.

### Description sommaire des dessins:

La présente invention et ses avantages apparaîtront mieux dans la description suivante de deux modes de réalisation donnés à titre d'exemple non limitatif, en référence aux dessins annexés, dans lesquels :
   - la figure 1 est une vue en perspective d'un générateur magnétocalorique selon l'invention à un étage thermique,
   - la figure 2 est une vue en coupe axiale du générateur de la figure 1,
   - la figure 3 est une vue partielle en perspective d'un premier mode de réalisation des moyens de circulation forcée du fluide caloporteur du générateur de la figure 1,
   - la figure 4 est une vue de détail agrandie de la figure 3,
   - la figure 5 est une vue partielle en perspective d'un deuxième mode de réalisation des moyens de circulation forcée du fluide caloporteur,
   - la figure 6 est une vue en perspective du corps de pompe faisant partie des moyens de circulation forcée de la figure 5,
   - la figure 7 est une vue en perspective partiellement coupée d'un troisième mode de réalisation des moyens de circulation forcée du fluide caloporteur,
   - la figure 8 est une vue en plan de la figure 7,
   - la figure 9 est une coupe axiale de la figure 8 selon la ligne de coupe IX-IX,
   - la figure 10 est une vue en coupe axiale du générateur de la figure 1 associé à un quatrième mode de réalisation des moyens de circulation forcée du fluide caloporteur,
   - la figure 11 est une vue simplifiée en perspective partiellement coupée du générateur de la figure 10, et
   - la figure 12 est une vue partielle éclatée du générateur de la figure 10.

### Illustrations de l'invention et différentes manières de la réaliser :

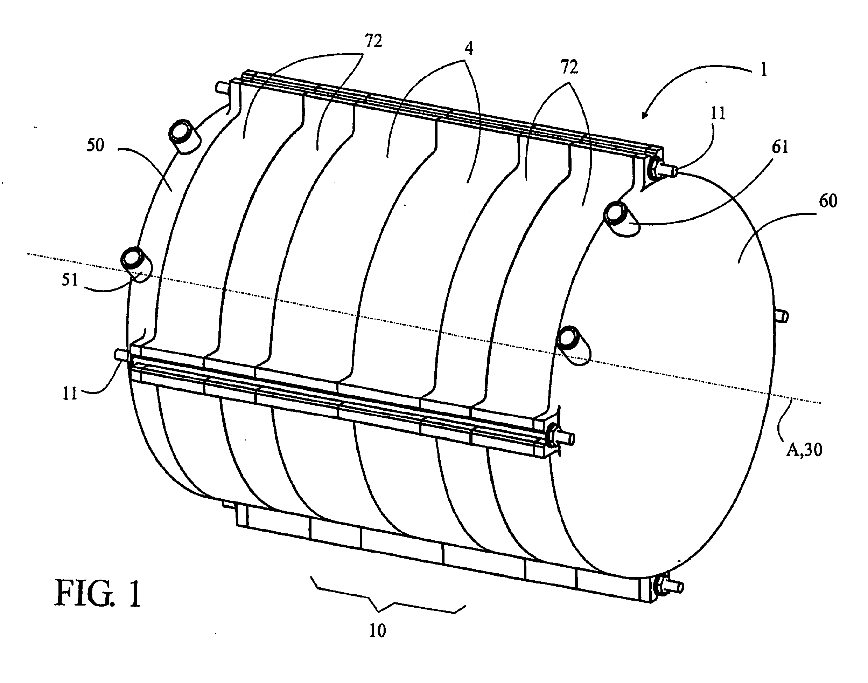

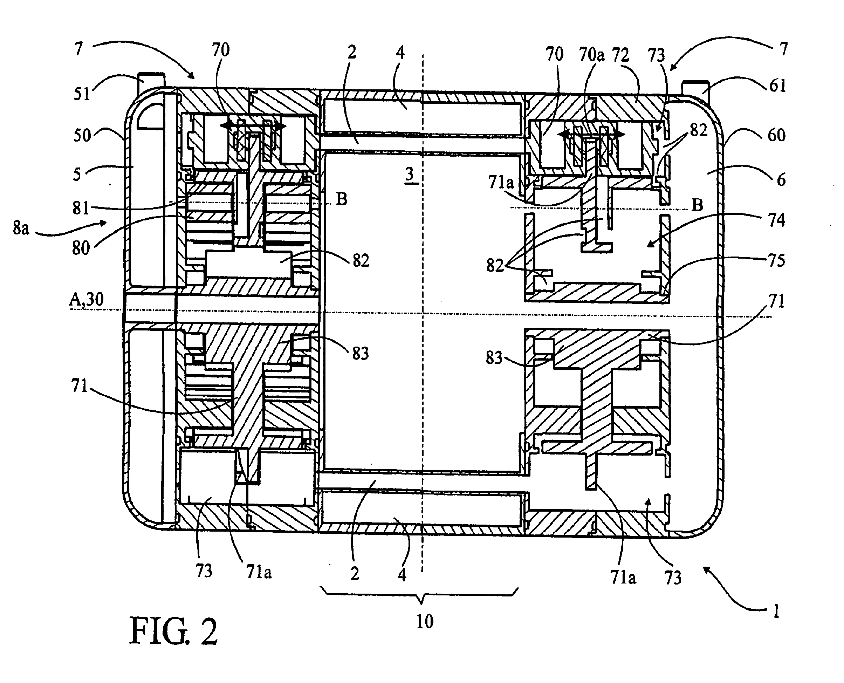

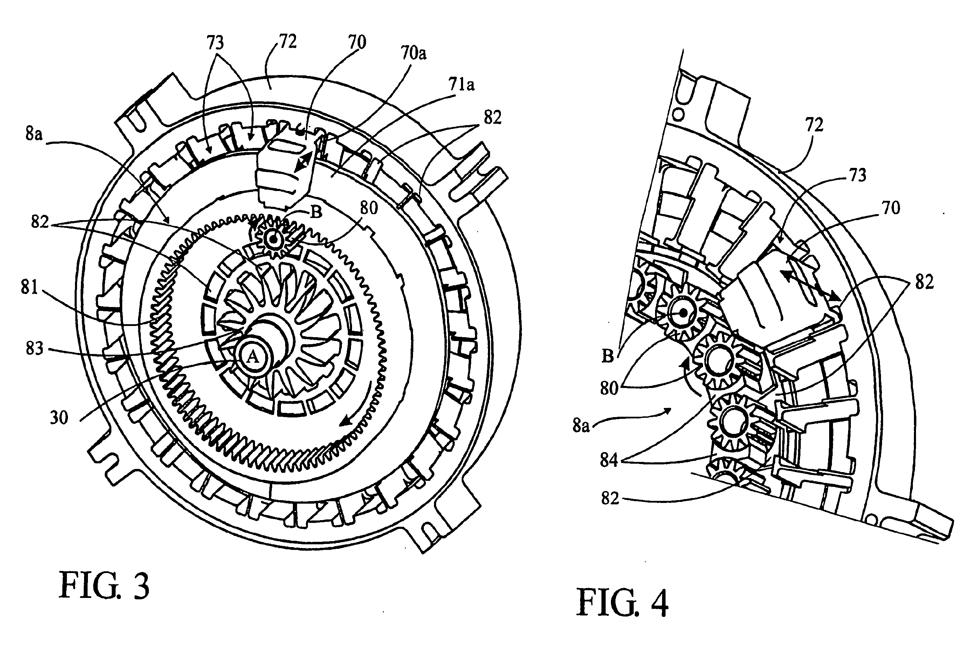

En référence aux figures 1 et 2, le générateur magnétocalorique 1 selon l'invention, appelé par la suite générateur 1, comprend au moins un étage thermique 10 comportant des éléments actifs 2 à base de matériau magnétocalorique, disposés en couronne autour d'un axe central A, et soumis à une variation de champ magnétique pour faire varier leur température selon le cycle de Carnot, et créer alternativement dans ces éléments actifs 2 un cycle de chauffage et un cycle de refroidissement. Le nombre d'étages thermiques 10 est déterminé en fonction du cahier des charges du générateur 1, et notamment du gradient de température souhaité, chaque étage thermique 10 pouvant constituer un module emboîtable et empilable. La variation de champ magnétique est par exemple générée au moyen d'un arrangement magnétique 3 disposé à l'intérieur des éléments actifs 2, entraîné en rotation autour de l'axe central A par un actionneur et associé à un dispositif de fermeture de champ 4 disposé à l'extérieur de la couronne d'éléments actifs 2. Cet arrangement magnétique 3 peut comporter des aimants permanents ou similaires, portés par un arbre moteur 30 (cf. Fig. 3 et 7 à 9) symbolisé sur les autres figures par l'axe central A, et entraînés par tout type d'actionneur connu (non représenté), en rotation continue ou non, alternative ou non.

Les éléments actifs 2 peuvent se présenter sous différentes formes, à savoir une couronne formée d'une pièce unique ou d'un assemblage de pièces adjacentes, de sections géométriques ou non, en matériau plein perforé ou micro-perforé, en matériau poreux, en poudre ou en particules agglomérées, en lamelles superposées axialement ou radialement, etc. à partir d'un même matériau magnétocalorique ou d'un assemblage de différents matériaux magnétocaloriques, associés ou non à d'autres matériaux thermiquement conducteurs.

Ce générateur 1 contient au moins un fluide caloporteur agencé pour collecter les calories et les frigories produites par les éléments actifs 2 au cours des cycles de chauffage et de refroidissement successifs, et les stocker respectivement dans une chambre d'échange dite chaude 5 et une chambre d'échange dite froide 6 disposées aux extrémités chaude et froide dudit générateur fermées par des couvercles 50, 60. Ces chambres d'échange 5, 6 sont destinées à échanger les calories et les frigories collectées avec des circuits extérieurs d'utilisation via par exemple d'échangeurs de chaleur (non représenté) raccordés à des embouts 51, 61.

Plus particulièrement en référence à la figure 2, ce générateur 1 comporte, de part et d'autre de l'étage thermique 10, des moyens de poussée 7 du fluide caloporteur au travers des éléments actifs 2, sous la forme de pistons 70 disposés en regard des éléments actifs 2 et entraînés en translation alternative par au moins une came 71, solidaire de l'arbre moteur, elle-même entraînée en rotation autour de l'axe central A par l'actionneur qui commande la rotation de l'arrangement magnétique 3. Dans le cas où le générateur 1 comporte plusieurs étages thermiques 10, les moyens de poussée 7 peuvent être communs à deux étages thermiques 10 consécutifs. Ces moyens de poussée 7 sont logés dans un corps 72 creux, qui peut être agencé pour s'assembler au dispositif de fermeture de champ 4 d'une part et aux couvercles 50, 60 d'autre part, notamment par emboîtement de formes complémentaires mâles/femelles, comme dans l'exemple des figures 1 à 3. Bien entendu, tout autre moyen d'assemblage peut être envisagé, avec ou sans enveloppe extérieure. Dans l'exemple illustré, des joints toriques ou similaires (non représentés) sont intercalés entre chaque pièce pour rendre cet assemblage étanche, qui est maintenu serré par des tirants 11 ou similaires, uniformément répartis sur la périphérie du générateur 1. Toujours dans l'exemple illustré à la figure 2, le corps 72 est réalisé en deux demi-coques assemblées radialement, délimitant une chambre 73 pour les pistons 70 et un réservoir 74 contenant le fluide caloporteur. Ce corps 72 comporte également des paliers 75 pour guider la came 71 en rotation. La came 71 comporte un profil de came 71a par exemple sinusoïdal, circulant dans une gorge 70a ménagée dans chaque piston 70.

Le générateur 1 selon les trois premiers modes de réalisation de l'invention se distingue de l'état de la technique en ce qu'il comporte des moyens de circulation forcée intégrés 8a, 8b, 8c agencés pour créer une circulation forcée du fluide caloporteur au moins dans le ou les réservoirs 74 de fluide et dans la ou les chambres 73 des pistons 70, selon que le générateur 1 comporte un ou plusieurs étages thermiques 10, ces réservoirs 74 de fluide pouvant être communicants ou non.

Dans l'ensemble des modes de réalisation, les moyens de circulation forcée 8a, 8b, 8c, 180 sont conçus pour s'intégrer audit générateur 1 dans son volume intérieur comme dans les modes de réalisation illustrés aux figures 2 à 12. Dans ce cas, ils se rapportent sur l'arbre moteur de l'arrangement magnétique 3 et sont entraînés par le même actionneur, ce qui permet une construction compacte et une seule alimentation de puissance.

Ces moyens de circulation forcée 8a, 8b, 8c, 180 permettent de créer un brassage du fluide caloporteur dans chaque réservoir 74, suivant un cycle en boucle ou un cycle alterné selon le type de moyens utilisés, pour mélanger le fluide avant et après son passage à travers les éléments actifs 2, à savoir la fraction de fluide chargée de calories et la fraction de fluide chargée de frigories, de manière à équilibrer la température de ce fluide dans chaque réservoir 74, et à renouveler en permanence le fluide dans les chambres 73 qui est poussé à travers les éléments actifs 2 par les pistons 70, ayant pour effet de faciliter la création et le maintien d'un gradient de température entre l'entrée et la sortie desdits éléments actifs 2, et par conséquent d'augmenter simultanément le gradient de température entre deux étages thermiques 10 consécutifs, et la puissance thermique globale du générateur 1.

Dans le premier mode de réalisation illustré aux figures 2 à 4, les moyens de circulation forcée 8a comportent un ensemble de petits pignons 80 satellites, disposés en cercle autour de l'axe central A, portés par le corps 72 et libres en rotation autour d'axes B solidaires dudit corps 2. Pour des questions de clarté, la partie droite de la figure 2 est épurée et ne montre pas les petits pignons 80, seul un petit pignon 80 est représenté sur la figure 3 et la came 71 n'est pas représentée dans le détail de la figure 4. Ces pignons 80 engrènent une couronne dentée 81 solidaire de la came 71 et entraînée en rotation autour de l'axe central A. La rotation de la came 71 fait tourner la couronne dentée 81 qui entraîne la rotation des petits pignons 80 fonctionnant comme des mini-pompes à engrenage, c'est-à-dire entraînant par leur denture le fluide caloporteur contenu dans le réservoir 74 en direction des pistons 70 et des éléments actifs 2, pour créer une circulation du fluide en boucle. A cet effet, le corps 72 délimite un corps de pompe 84 pour chaque petit pignon 80, et des passages de fluide 82 (cf. fig. 4) sous la forme de canaux, de rainures, d'orifices ou similaires, sont ménagés dans le corps 72 et dans la came 71 pour mettre en communication, dès l'ouverture d'un passage dans une des chambres 73, le réservoir 74 avec la chambre d'échange correspondante 5, 6 ou un réservoir 74 voisin si le générateur 1 comporte plusieurs étages thermiques 10, d'une part, et avec la chambre 73 des pistons 70 d'autre part. Les petits pignons 80 sont de préférence disposés à proximité des pistons 70. Ainsi, la fraction de fluide caloporteur poussée au travers des éléments actifs 2 est renouvelée en permanence. Ces moyens de circulation forcée 8a comportent également une turbine 83 centrale, solidaire de la came 71 et entraînée en rotation autour de l'axe central A pour augmenter encore le brassage du fluide caloporteur au sein du réservoir 74. A cet effet, la came 71 comporte à proximité des pales de la turbine 83 des passages de fluide 82 traversant pour permettre la circulation du fluide caloporteur de part en part de la turbine 83 et de la came 71. Dans ce mode de réalisation, la pièce constituant la came 71 combine plusieurs fonctions : l'entraînement en translation alternative des pistons 70 pour pousser le fluide caloporteur à travers les éléments actifs 2, l'entraînement des petits pignons 80 pour créer des mini-pompes à engrenage forçant la circulation du fluide caloporteur en direction des pistons 70 et des éléments actifs 2, et le brassage forcé du fluide caloporteur dans le réservoir 74. Bien entendu et en fonction des variantes de réalisation, la came 71 peut être proposée avec ou sans turbine 83, et avec ou sans les petits pignons 80.

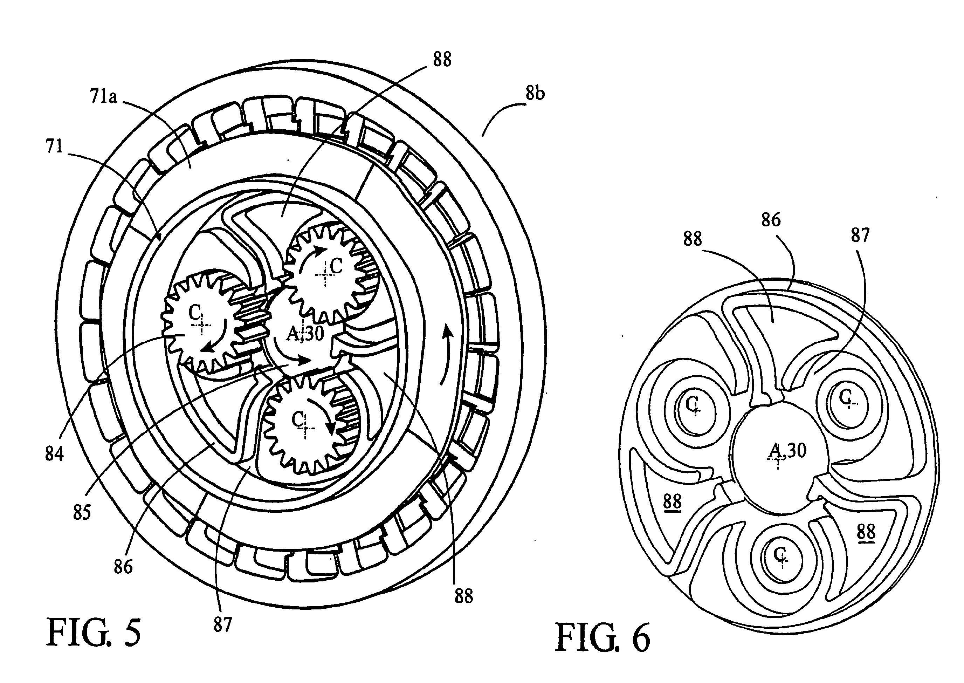

Dans le deuxième mode de réalisation illustré aux figures 5 et 6, les moyens de circulation forcée 8b comportent au moins un pignon 84 satellite, et dans l'exemple représenté trois pignons 84 satellites, ce nombre n'étant pas limitatif, disposés en cercle autour de l'axe central A, à égale distance ou non, portés par le corps 72 et libres en rotation autour d'axes C solidaires dudit corps 2. Ces pignons 84 engrènent un pignon moteur 85 (représenté par un trait de référence à la figure 5) solidaire de la came 71 et entraînée en rotation autour de l'axe central A. La rotation de la came 71 fait tourner le pignon moteur 85 qui entraîne la rotation des pignons 84 satellites fonctionnant comme des pompes à engrenage, c'est-à-dire entraînant par leur denture le fluide caloporteur contenu dans le réservoir 74 en direction des pistons 70 et des éléments actifs 2 pour créer une circulation du fluide en boucle. A cet effet, ces pignons 84 sont associés à un corps de pompe 86 fixe monté dans le corps 72, pourvu de canaux 87 de circulation du fluide autour de chaque pignon 84 communiquant avec les passages de fluide 82 prévus dans la came 71 et le corps 72 en référence à l'exemple précédent. Ce corps de pompe 86 comporte également des passages de fluide 88 traversant pour permettre la circulation du fluide caloporteur de part en part du corps de pompe 86 et de la came 71. Dans ce mode de réalisation, le pignon moteur 85 joue également le rôle de la turbine 83 de l'exemple précédent, c'est-à-dire qu'il augmente le brassage du fluide caloporteur dans le réservoir 74.

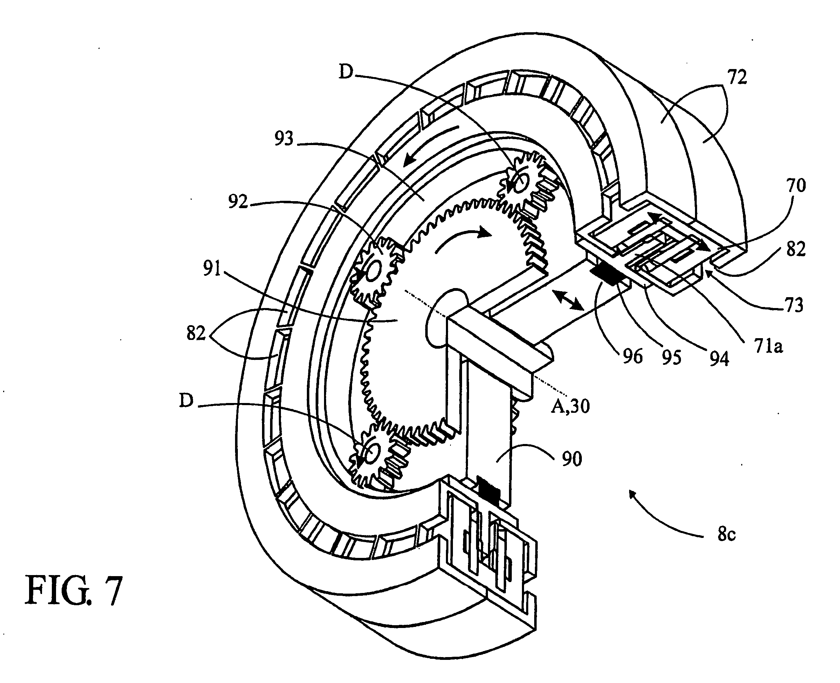

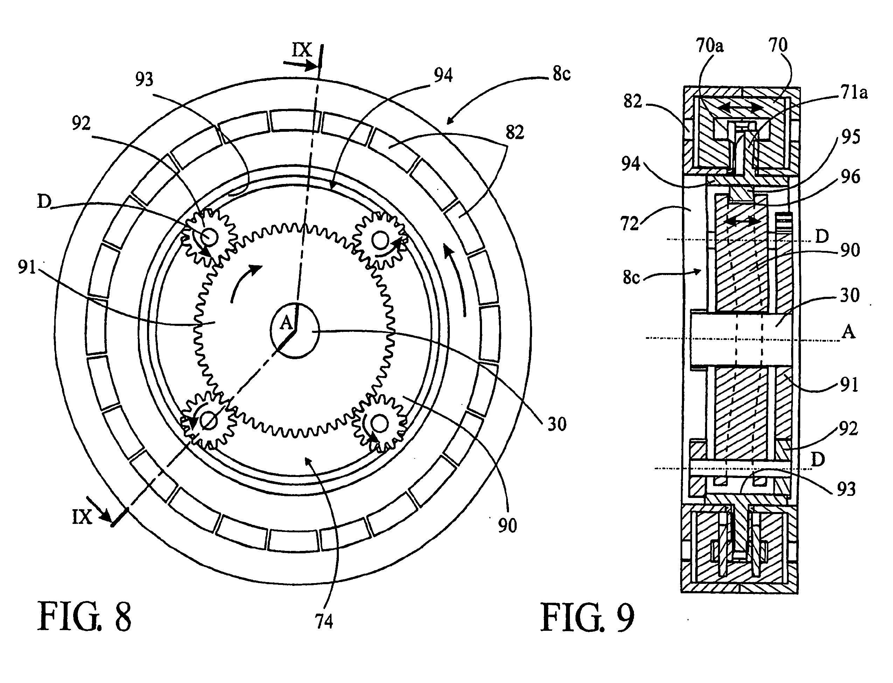

Dans le troisième mode de réalisation illustré aux figures 7 à 9, les moyens de circulation forcée 8c comportent un piston central 90 animé d'un mouvement de translation alternative pour fonctionner comme une pompe à piston et créer une circulation du fluide alternée. Ce piston central 90 est monté libre en translation et en rotation sur l'arbre moteur 30 de l'arrangement magnétique 3. Cet arbre moteur 30 porte une roue dentée 91 qui engrène un ou plusieurs pignons 92, disposés en cercle autour de l'axe central A, à égale distance ou non, portés par le corps 72 et libres en rotation autour d'axes D solidaires dudit corps 72. Ces pignons 92 engrènent une couronne dentée 93 intérieure entraînant en rotation une came 94 autour de l'axe central A. La came 94 a la même fonction que la came 71 des exemples précédents et comporte le même type de profil de came 71a circulant dans la gorge 70a des pistons 70 pour les déplacer en translation alternative et pousser le fluide caloporteur dans les éléments actifs 2. Cette came 94 assure simultanément le déplacement en translation alternative du piston central 90 au moyen d'un doigt suiveur 95 circulant dans un chemin de came 96 ménagé en périphérie du piston central 90, ce chemin de came 96 ayant sensiblement une forme sinusoïdale (cf. fig. 9). La course axiale du piston central 90 est limitée par le corps 72 d'un côté et la roue dentée 91 de l'autre côté. Comme dans les exemples précédents, des passages de fluide 82 sont ménagés dans le corps 72 pour permettre la circulation du fluide caloporteur entre le ou les réservoirs 74 et la chambre 73 des pistons 70.

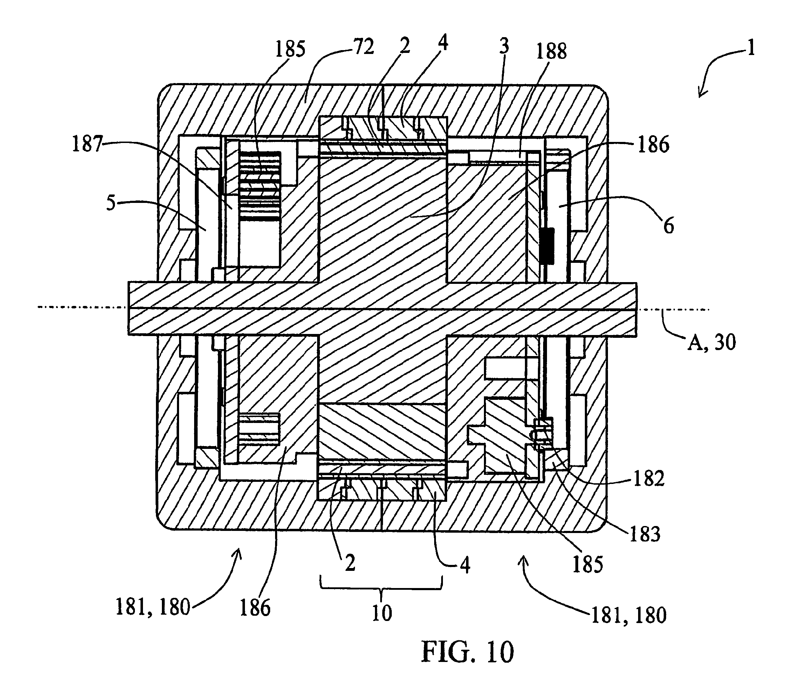

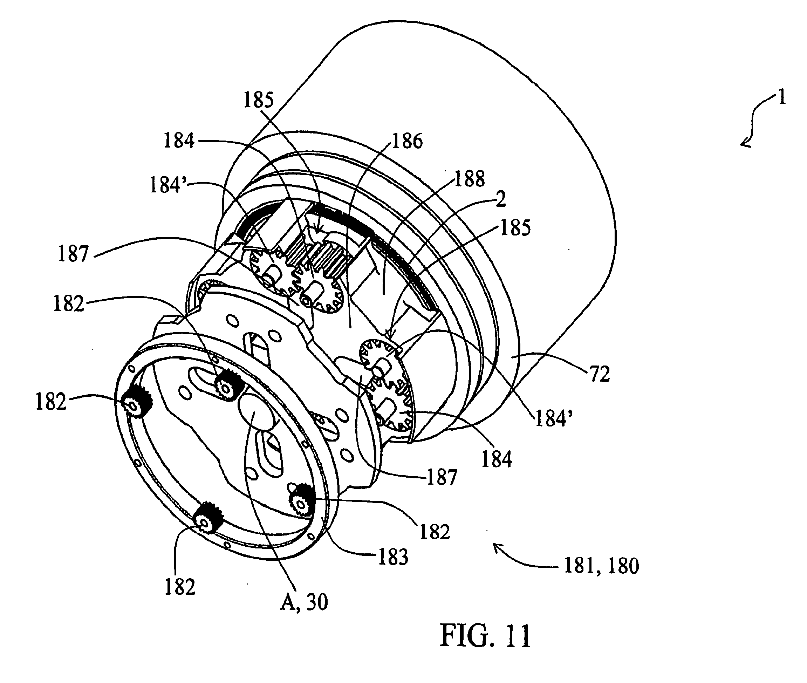

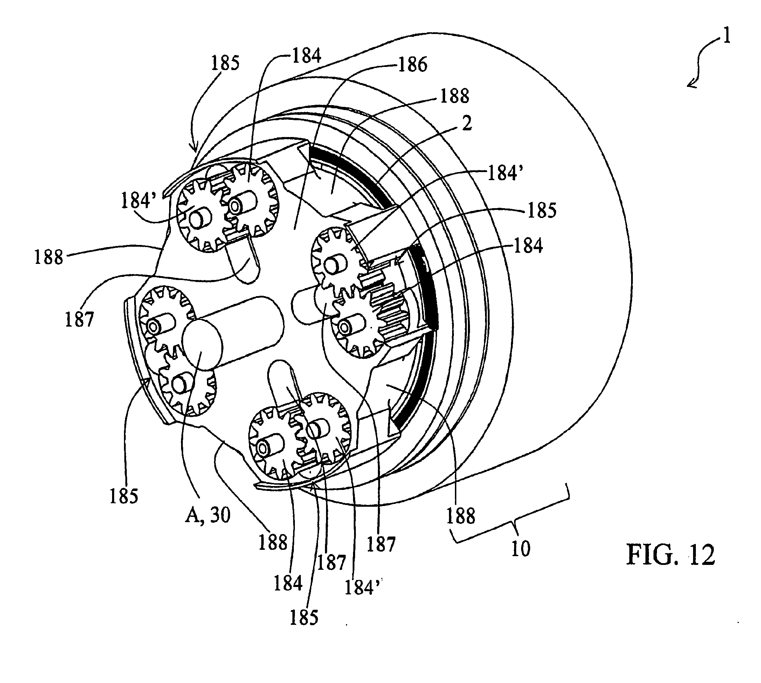

Dans le quatrième mode de réalisation illustré aux figures 10 à 12, les moyens de circulation forcée 180 forment simultanément les moyens de poussée. Dans ce mode de réalisation, les moyens de circulation forcée sont constitués par deux ensembles 181 disposés de part et d'autre de l'étage thermique 10. Les figures 11 et 12 représentent chacune un seul ensemble 181. L'autre ensemble 181 est identique et décalé selon un angle de 45° par rapport à l'axe central A. L'ensemble 181 représenté comporte quatre engrenages 185 disposés autour dudit axe central A et intégrés dans un support 186 entraîné en rotation par l'arbre moteur 30. Chaque engrenage 185 comporte deux roues dentées 184 et 184' et une 184 desdites roues dentées est reliée de manière fixe en rotation à un pignon satellite 182 engrenant une couronne dentée intérieure 183 (dont les dentures ne sont pas représentées sur les figures). Cette couronne dentée intérieure 183 est solidaire du corps 72 du générateur 1 de telle sorte que la rotation du support 186 entraîne la rotation des pignons satellites 182 engrenant les dentures de la couronne dentée 183 fixe, et simultanément la rotation de la roue dentée 184 et donc la rotation de la roue dentée 184' associée de chaque engrenage 185. Ainsi, chaque engrenage forme une pompe entraînant le fluide en direction de l'étage thermique 10.

A cet effet, des passages de fluide caloporteur sont prévus dans les ensembles 181. Ces passages de fluide caloporteur comportent notamment une chambre de brassage 187 pour chaque engrenage 185, ladite chambre de brassage 187 étant réalisée dans l'épaisseur du support 186 et en communication fluidique avec engrenage 185 correspondant et la chambre chaude 5 ou froide 6 concernée, ainsi que des échancrures 188 réalisées au niveau de la face radiale du support 186, entre les engrenages 185 (cf. fig. 11). Les supports 186 sont disposés de manière à être décalés angulairement de 45° de telle manière que lorsqu'ils sont mis en rotation autour de l'axe central A, chaque élément actif 2 est en regard d'un seul engrenage 185. Ainsi, le fluide caloporteur poussé par un engrenage 185 situé au niveau de la chambre d'échange chaude 5 à travers un élément actif 2 débouche au niveau d'une échancrure 188 située du côté de la chambre d'échange froide 6 et se retrouve dans la chambre d'échange froide 6 où il se mélange avec le fluide déjà présent dans cette chambre d'échange froide 6. Une partie de ce fluide caloporteur est ensuite aspirée par les engrenages 185 dans leur chambre de brassage 187 et est refoulée vers les éléments actifs 2, en direction de la chambre d'échange chaude 5. Dans cette quatrième variante de réalisation, le décalage angulaire des ensembles 181 permet d'éviter l'utilisation de pistons, le fluide caloporteur étant à la fois poussé et brassé par les engrenages 185 se déplaçant devant des éléments actifs 2 lors de la rotation du support 186.

Lorsqu'il comporte des pistons 70, le fonctionnement du générateur 1 consiste à entraîner avec un même actionneur (non représenté) la rotation de l'arrangement magnétique 3 pour créer les cycles de chauffage et de refroidissement au sein des éléments actifs 2, la rotation des cames 71 pour déplacer les pistons 70 en translation alternative de manière à pousser le fluide caloporteur à travers lesdits éléments actifs 2, la rotation des moyens 8a à 8c pour brasser le fluide caloporteur dans les réservoirs 74 et le mettre en circulation forcée, pour homogénéiser sa température entre chaque étage thermique 10. Lorsqu'il ne comporte pas de pistons, le fonctionnement du générateur 1 consiste à entraîner avec un même actionneur (non représenté) la rotation de l'arrangement magnétique 3 pour créer les cycles de chauffage et de refroidissement au sein des éléments actifs 2 et la rotation des supports 186 décalés angulairement pour entraîner en rotation les engrenages 185 de manière à pousser le fluide caloporteur à travers lesdits éléments actifs 2, à le brasser dans les chambres de brassage 187 et à le mettre en circulation forcée, pour homogénéiser sa température entre chaque étage thermique 10.

L'empilage de plusieurs étages thermiques 10 permet ainsi d'augmenter en cascade le gradient de température entre les chambres d'échange chaude 5 et froide 6 disposées aux extrémités et conçues pour que les calories et frigories collectées puissent être véhiculées vers des circuits extérieurs d'utilisation (chauffage, climatisation, tempérage, etc.), soit par conduction, soit par échangeur de chaleur (non représenté).

Le fluide caloporteur utilisé est de préférence liquide. On choisira une composition chimique du fluide caloporteur adaptée à la plage de température voulue afin d'obtenir un échange thermique maximal. Ce fluide peut donc être liquide, gazeux ou diphasique. S'il est liquide, on utilisera par exemple de l'eau pure pour des températures positives et de l'eau additionnée d'antigel, par exemple un produit glycolé ou une saumure pour des températures négatives.

### Possibilités d'application industrielle:

Toutes les pièces qui composent le générateur 1 selon l'invention peuvent être réalisées en série selon des processus industriels reproductibles. Toutes ces pièces à l'exception des éléments actifs 2 et des moyens magnétiques 3, 4 peuvent être réalisées dans des matériaux thermiquement isolants moulés, injectés ou similaires. Les étages thermiques 10 peuvent être assemblés par tout moyen d'étanchéité approprié et tout moyen de fixation adéquat connu, comme des tirants 11 (cf. fig. 1). La réalisation du générateur 1 par étages thermiques 10, compacts et empilables, qui peuvent être standardisés, permet de répondre à une large gamme d'applications aussi bien industrielles que domestiques, à des coûts compétitifs, dans un faible encombrement, en offrant des performances de pouvoir calorifique non égalées à ce jour avec ce type de générateurs.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Générateur magnétocalorique (1) comportant au moins un étage thermique (10) pourvu d'éléments actifs (2) à base de matériau magnétocalorique disposés autour d'un axe central (A), un, arrangement magnétique (3) porté par un arbre moteur (30), entraîné en rotation autour dudit axe central (A) par un actionneur, et agencé pour soumettre lesdits éléments actifs (2) à une variation de champ magnétique, au moins un fluide caloporteur contenu dans ledit générateur (1), ce fluide étant poussé au travers desdits éléments actifs (2) par des moyens de poussée (7,180), au moins une chambre d'échange dite froide (6) et une chambre d'échange dite chaude (5) destinées à être couplées respectivement à des circuits extérieurs d'utilisation, ledit générateur comportant des moyens de circulation forcée (8a, 8b, 8c, 180) du fluide caloporteur, **caractérisé en ce que** lesdits moyens de circulation forcée (8a, 8b, 8c, 180) sont intégrés audit générateur (1) dans son volume intérieur, sont couplés audit arbre moteur (30) pour être entraînés par le même actionneur que celui dudit arrangement magnétique (3), et comportent des passages de fluide (82, 87, 88, 187, 188) ménagés à l'intérieur dudit générateur pour permettre la circulation et simultanément le brassage dudit fluide à l'intérieur dudit générateur.

2. Générateur selon la revendication 1, dans lequel lesdits moyens de poussée (7) comportent au moins un piston (70) agencé pour pousser ledit fluide caloporteur au travers desdits éléments actifs (2) et entraîné en translation alternative par au moins une came (94) couplée en rotation avec ledit arbre moteur (30), **caractérisé en ce que** lesdits moyens de circulation forcée (8c) comportent au moins une pompe à piston pourvue d'au moins un piston central (90) porté librement par ledit arbre moteur (30) et entraîné en translation alternative par ladite came (94).

3. Générateur selon la revendication 2, **caractérisé en ce que** ladite came (94) comporte une couronne dentée intérieure (93) couplée en rotation avec ledit arbre moteur (30) au moyen d'un train d'engrenages à pignons satellites (91, 92).

4. Générateur selon la revendication 1, **caractérisé en ce que** lesdits moyens de circulation forcée (8b) comportent au moins un pignon (84) satellite engrenant un pignon moteur (85) solidaire dudit arbre moteur (30) et associé à un corps de pompe (86) pourvu de canaux de circulation de fluide (87), ledit pignon (84) satellite associé audit corps de pompe (86) formant une pompe à engrenage.

5. Générateur selon la revendication 1, dans lequel lesdits moyens de poussée (7) comportent au moins un piston (70) agencé pour pousser ledit fluide caloporteur au travers desdits éléments actifs (2) et entraîné en translation alternative par au moins une came (71) couplée en rotation avec ledit arbre moteur (30), **caractérisé en ce que** lesdits moyens de circulation forcée (8a) comportent des petits pignons (80) satellites disposés autour dudit axe central (A), portés par le corps (72) du générateur (1) et engrenant une couronne dentée intérieure (81) solidaire de ladite came (71), et des passages de fluide (82), chaque petit pignon (80) satellite formant une mini pompe à engrenage.

6. Générateur selon la revendication 5, **caractérisé en ce que** lesdits moyens de circulation forcée (8a) comportent au moins une turbine (83) couplée audit arbre moteur (30).

7. Générateur selon la revendication 1, **caractérisé en ce que** lesdits moyens de circulation forcée (180) forment simultanément lesdits moyens de poussée.

8. Générateur selon la revendication 7, **caractérisé en ce que** lesdits moyens de circulation forcée (180) comportent deux ensembles (181) disposés de part et d'autre dudit étage thermique (10) et décalés angulairement, chaque ensemble (181) comportant des pignons satellites (182) disposés autour dudit axe central (A), engrenant une couronne dentée intérieure (183) solidaire du corps (72) du générateur (1) et lié chacun en rotation à l'une (184) des deux roues dentées (184, 184') d'un engrenage (185) formant une mini pompe à engrenage, ledit engrenage (185) étant intégré dans un support (186) entraîné en rotation par ledit arbre moteur (30), et **en ce que** lesdits ensembles (181) comportent des passages traversants autorisant une circulation de fluide entre la chambre d'échange chaude (5) ou froide (6) concernée et les éléments actifs (2).

## Claims

1. Magnetocaloric generator (1) comprising at least one thermal stage (10) fitted with active elements (2) made of a magnetocaloric material and arranged around a central axis (A), a magnetic arrangement (3) supported by a drive shaft (30) rotated around the said central axis (A) by an actuator, and arranged to subject the said active elements (2) to a variation in magnetic field, at least one heat transfer fluid contained in the said generator (1) and pushed through the said active elements (2) by pushing means (7, 180), at least one so-called cold exchange chamber (6) and one so-called hot exchange chamber (5) designed to be respectively coupled to external utilization circuits, the said generator comprising means for the forced circulation (8a, 8b, 8c, 180) of the heat transfer fluid, **characterized in that** the said means of forced circulation (8a, 8b, 8c, 180) are integrated into the inner volume of the said generator (1), are coupled to the said drive shaft (30) so as to be driven by the same actuator as that of the said magnetic arrangement (3), and comprise fluid passages (82, 87, 88, 187, 188) located inside the said generator to allow the circulation and simultaneously the mixing of the fluid inside the generator.

2. Generator according to claim 1, in which the said pushing means (7) comprise at least one piston (70) arranged to push the said heat transfer fluid through the said active elements (2) and driven into reciprocating translation by at least one cam (94) coupled in rotation to the said drive shaft (30), **characterized in that** the said means of forced circulation (8c) comprise at least one piston pump with at least one central piston (90) freely supported by the said drive shaft (30) and driven into reciprocating translation by the said cam (94).

3. Generator according to claim 2, **characterized in that** the said cam (94) comprises an inner crown gear (93) coupled in rotation with the said drive shaft (30) by means of a planetary gear train (91, 92).

4. Generator according to claim 1, **characterized in that** the said means of forced circulation (8b) comprise at least one planet gear (84) meshing with a drive gear (85) integral with the said drive shaft (30) and associated with a pump housing (86) fitted with channels for the circulation of the fluid (87), with the said planet gear (84) associated with the said pump housing (86) forming a gear pump.

5. Generator according to claim 1, **characterized in that** the said pushing means (7) comprise at least one piston (70) arranged to push the said heat transfer fluid through the said active elements (2) and driven into reciprocating translation by at least one cam (71) coupled in rotation to the said drive shaft (30), **characterized in that** the said means of forced circulation (8a) comprise small planet gears (80) arranged around the said central axis (A), supported by the body (72) of the generator (1) and meshing with an inner crown gear (81) integral with the said cam (71), and fluid passages (82), with each small planet gear (80) forming a mini gear pump.

6. Generator according to claim 5, **characterized in that** the said means of forced circulation (8a) comprise at least one turbine (83) coupled to the said drive shaft (30).

7. Generator according to claim 1, **characterized in that** the said means of forced circulation (180) simultaneously form the said pushing means.

8. Generator according to claim 7, **characterized in that** the said means of forced circulation (180) comprise two assemblies (181) arranged on either side of the said thermal stage (10) and angularly offset, each assembly (181) comprising planet gears (182) arranged around the said central axis (A), meshing with an inner crown gear (183) integral with the body (72) of the generator (1) and each linked in rotation to one (184) of the two toothed wheels (184, 184') of a gear (185) that forms a mini gear pump, the said gear (185) being integrated in a support (186) driven in rotation by the said drive shaft (30), and **in that** the said assemblies (181) comprise through passages that enable
the fluid to circulate between the hot (5) or cold (6) exchange chamber concerned and the active elements (2).

## Patentansprüche

1. Magnetokalorischer Generator (1) bestehend aus mindestens einer Wärmeerzeugungsstufe (10), die mit um eine Mittelachse (A) angeordneten aktiven Elementen (2) aus magnetokalorischem Material ausgestattet ist, aus einer von einer Antriebswelle (30) getragenen magnetischen Anordnung (3), die mittels eines Antriebs um die besagte Mittelachse (A) in Drehung versetzt wird und angeordnet ist, um die besagten aktiven Elemente (2) einer Magnetfeld-Variation auszusetzen, aus mindestens einem in dem besagtem Generator (1) enthaltenen Wärmeübertragungsfluid, wobei dieses Fluid durch Druckmittel (7, 180) durch die besagten aktiven Elemente (2) hindurch gedrückt wird, aus mindestens einer sogenannten kalten Austauschkammer (6) und einer sogenannten warmen Austauschkammer (5), die jeweils dazu bestimmt sind, mit externen Benutzungskreisläufen verbunden zu werden, wobei der besagte Generator Mittel (8a, 8b, 8c, 180) für den Zwangsumlauf des Wärmeübertragungsfluids beträgt, **dadurch gekennzeichnet, dass** die besagten Mittel (8a, 8b, 8c, 180) für den Zwangsumlauf in dem Innenraum des besagten Generators (1) integriert sind, an die besagte Antriebswelle (30) gekoppelt sind um durch den selben Antrieb als der der besagten magnetischen Anordnung (3) angetrieben zu werden, und innerhalb des besagten Generators angeordnete Durchgänge (82, 87, 88, 187, 188) für das Fluid betragen, um den Umlauf und gleichzeitig das Umrühren des besagten Fluids in dem besagten Generator zu ermöglichen.

2. Generator nach Anspruch 1, in welchem die besagten Druckmittel (7) mindestens einen Kolben (70) betragen, der angeordnet ist, um das besagte Wärmeübertragungsfluid durch die besagten aktiven Elemente (2) hindurch zu drücken, und der von mindestens einer mit der besagten Antriebswelle (30) in Drehung gekoppelten Steuerkurve (94) in
einer abwechselnden hin und her Translation angetrieben wird, **dadurch gekennzeichnet, dass** die besagten Mittel (8c) für den Zwangsumlauf mindestens eine Kolbenpumpe betragen, die mit mindestens einem Mittelkolben (90) ausgestattet ist, der frei von der besagten Antriebswelle (30) getragen wird und durch die besagte Steuerkurve (94) in einer abwechselnden hin und her Translation angetrieben wird.

3. Generator nach Anspruch 2, **dadurch gekennzeichnet, dass** die besagte Steuerkurve (94) einen Innenzahnkranz (93) beträgt, der über ein Getriebe mit Planetenräder (91, 92) mit der besagten Antriebswelle (30) in Drehung gekoppelt ist.

4. Generator nach Anspruch 1, **dadurch gekennzeichnet, dass** die besagten Mittel (8b) für den Zwangsumlauf mindestens ein Planetenrad (84) betragen, das in ein mit der besagten Antriebswelle (30) verbundenes Antriebsritzel (85) eingreift und mit einem mit Fluidumlaufkanälen (87) versehenen Pumpenkörper (86) verbunden ist, wobei das besagte mit dem besagten Pumpenkörper (86) verbundene Planetenrad (84) eine Getriebepumpe bildet.

5. Generator nach Anspruch 1, in welchem die besagten Druckmittel (7) mindestens einen Kolben (70) betragen, der angeordnet ist, um das besagte Wärmeübertragungsfluid durch die besagten aktiven Elemente (2) hindurch zu drücken, und der von mindestens einer mit der besagten Antriebswelle (30) in Drehung gekoppelten Steuerkurve (71) in einer abwechselnden hin und her Translation angetrieben wird, **dadurch gekennzeichnet, dass** die besagten Mittel (8a) für den Zwangsumlauf kleine, um die besagte Mittelachse (A) angeordnete Planetenräder (80) betragen, die vom Körper (72) des Generators (1) getragen werden und in einen mit der besagten Steuerkurve (71) verbundenen Innenzahnkranz (81) eingreifen, sowie Durchgänge (82) für das Fluid, wobei jedes kleine Planetenrad (80) eine Mini-Getriebepumpe bildet.

6. Generator nach Anspruch 5, **dadurch gekennzeichnet, dass** die besagten Mittel (8a) für den Zwangsumlauf mindestens eine mit der besagten Antriebswelle (30) verbundene Turbine (83) betragen.

7. Generator nach Anspruch 1, **dadurch gekennzeichnet, dass** die besagten Mittel (180) für den Zwangsumlauf ebenfalls die Druckmittel bilden.

8. Generator nach Anspruch 7, **dadurch gekennzeichnet, dass** die besagten Mittel (180) für den Zwangsumlauf zwei beidseitig der Wärmeerzeugungsstufe (10) und winkelversetzt angeordnete Baugruppen (181) betragen, wobei jede Baugruppe (181) um die besagte Mittelachse (A) angeordnete Platenräder (182) beträgt, die in einen mit dem Körper (72) des Generators (1) verbundenen Innenzahnkranz (183) eingreifen, und die jeweils in Drehung mit einem (184) der beiden Zahnräder (184, 184') eines eine Mini-Getriebepumpe bildenden Getriebes (185) verbunden sind, wobei das besagte Getriebe (185) in einem durch die besagte Antriebswelle (30) in Drehung versetzten Träger (186) integriert ist, und **dadurch**, dass die besagten Baugruppen (181) durchgehende Öffnungen betragen, die einen Umlauf des Fluids zwischen der betroffenen warmen (5) oder kalten (6) Austauschkammer und den aktiven Elemente (2) erlauben.
